# EUROPEAN PATENT APPLICATION

(11) **EP 2 399 789 A1**
(43) Date of publication of application: **28.12.2011**
(21) Application number: 11169675.3
(22) Date of filing: 13.06.2011
(51) Int. Cl.: B60S 9/10

(54) **Working trim stabilizer and load distribution device for agricultural and plant-nursery machines, and work vehicle, particularly for plant nursery work, provided with such a stabilizer device**

(30) Priority: 23.06.2010 IT PD20100196
(71) Applicant: Gastaldi, Christian, 35131 Padova (IT)
(72) Inventor: Barbieri, Lucio, 35025 Cartura PD (IT)
(74) Representative: Modiano, Micaela Nadia

(57) **Abstract**

A working trim stabilizer and load distribution device (10) for agricultural and plant-nursery machines, comprising a ground resting contact element (11) which is supported by a mechanism of the pantograph type (12) actuated by actuation means designed to act in a first direction (X) which is transverse to a second direction (Y) of motion of the resting element (11) from a first inactive configuration to a second configuration for use.

## Description

The present invention relates to a working trim stabilizer and load distribution device for agricultural and plant-nursery machines.

The invention also relates to a work vehicle, particularly for plant nursery work, which is provided with a stabilizer / load distribution device according to the invention.

Nowadays in order to stabilize a vehicle that is designed to perform heavy work in a plant nursery, such as for example a root balling machine, it is necessary to resort to auxiliary means of support that confer stability on the vehicle during the root balling operations, and which distribute the load between the front and rear of the vehicle, depending on the work steps.

The support means known today are comprised of a vertically-operating jack, placed at the back of the work vehicle, i.e. at the end of the vehicle opposite to the root balling tool.

It is essential that the movement of the jack be vertical, because in the step of stabilizing the work vehicle it is necessary to prevent the vehicle from moving, even slightly, forward or backward as a result of being pushed by the jack which is not operating vertically. Indeed, such shifts of the work vehicle could even result in the root balling tool operating in a configuration that is incorrect and undesired compared to the optimum.

The jack performs the downward telescopic extension of an upright member that can perform a translational movement and has, at the lower end, a plate-like ground resting contact element. The tubular body of the jack is fixed to the back of the vehicle, right in front of the radiator grille, this position of the radiator in particularly compact work vehicles such as nursery gardening vehicles being substantially mandatory.

Such auxiliary support means, although widespread and appreciated, have a number of drawbacks.

A first drawback consists in that the jack is fixed right in front of the radiator, thus reducing its heat exchange capacity.

A second drawback arises when the upright member of the jack is in the extended configuration for use: indeed, with the jack extended and the plate-like element resting on the ground, it is not unusual, due to settling movements of the vehicle during the root balling operations, movements which are by the way expected, or following the setting in motion of the vehicle owing to operator distraction, for the jack in the extended configuration to be subjected to a torque that tends to bend it to the point where the fixed tubular body breaks, or the means of fixing the tubular body to the chassis of the work vehicle break.

The aim of the present invention is to provide a working trim stabilizer and load distribution device, for agricultural and plant-nursery machines, which is capable of overcoming the above-mentioned drawbacks of the devices of the known type.

Within this aim, an object of the invention is to provide a device that can be positioned so as not to affect the radiator grille and that consequently does not reduce the heat exchange capacity of the radiator.

Another object of the invention is to provide a device that, in the lowered configuration for use, better resists the stresses in the event of unexpected or improper movement of the work vehicle with which it is associated.

Another object of the invention is to provide a stabilizer device that is provided with movement that is at right angles to the ground and has performance levels that are not less than those of the above-mentioned devices of the known type.

Another object of the invention is to provide a stabilizer device of less encumbrance than the devices of the known type.

Another object of the invention is to provide a nursery garden work vehicle, of the type of a root balling machine or the like, which is provided with a stabilizer device as per the main aim and the subsequent objects.

Another object of the invention is to provide a working trim stabilizer and load distribution device for agricultural and plant-nursery machines, as well as a nursery garden work vehicle, of the type of a root balling machine or the like, which is provided with such a stabilizer device, and can be produced with known systems and technologies, as well as at low cost.

This aim and these objects, as well as others which will become more evident hereinafter, are achieved by a working trim stabilizer and load distribution device for agricultural and plant-nursery machines, characterized in that it comprises a ground resting contact element supported by a mechanism of the pantograph type actuated by actuation means designed to act in a direction which is transverse to the direction of motion of said resting element from a first inactive configuration to a second configuration for use.

The invention also relates to a work vehicle, particularly for plant nursery work, of the type that comprises at the front a working tool and, at the rear, a radiator for cooling the engine, and is provided at the rear with a working trim position stabilizer and load distribution device, characterized in that said stabilizer device comprises a ground resting contact element, which is supported by a mechanism of the pantograph type actuated by actuation means designed to act in a first direction which is transverse to a second direction of motion of said resting element from a first inactive configuration to a second configuration for use, said stabilizer device being positioned substantially on the rear part of the chassis so as to work below said radiator.

Further characteristics and advantages of the invention will become better apparent from the detailed description that follows of a preferred, but not exclusive, embodiment both of the stabilizer device and of the work vehicle according to the invention, said preferred embodiments being illustrated for the purposes of non-limiting example in the accompanying drawings wherein:
Figure 1 is a view of a work vehicle for nursery gardens according to the invention, provided with a stabilizer device according to the invention;
Figure 2 is a view of a detail of the vehicle with the stabilizer device according to the invention, in a configuration for non-use of the device;
Figure 3 is a view of the same detail in Figure 2 with the stabilizer device according to the invention in the lowered configuration for use;
Figure 4 is a perspective view from above of part of the device according to the invention;
Figure 5 is a schematical side view of the stabilizer device according to the invention.

With reference to the figures, a working trim stabilizer and load distribution device for agricultural and plant-nursery machines, according to the invention, is generally designated with the reference numeral 10.

The stabilizer device 10 comprises, in the embodiment described herein for the purposes of non-limiting example of the invention, a ground resting contact element 11, which is supported by a mechanism 12 of the pantograph type.

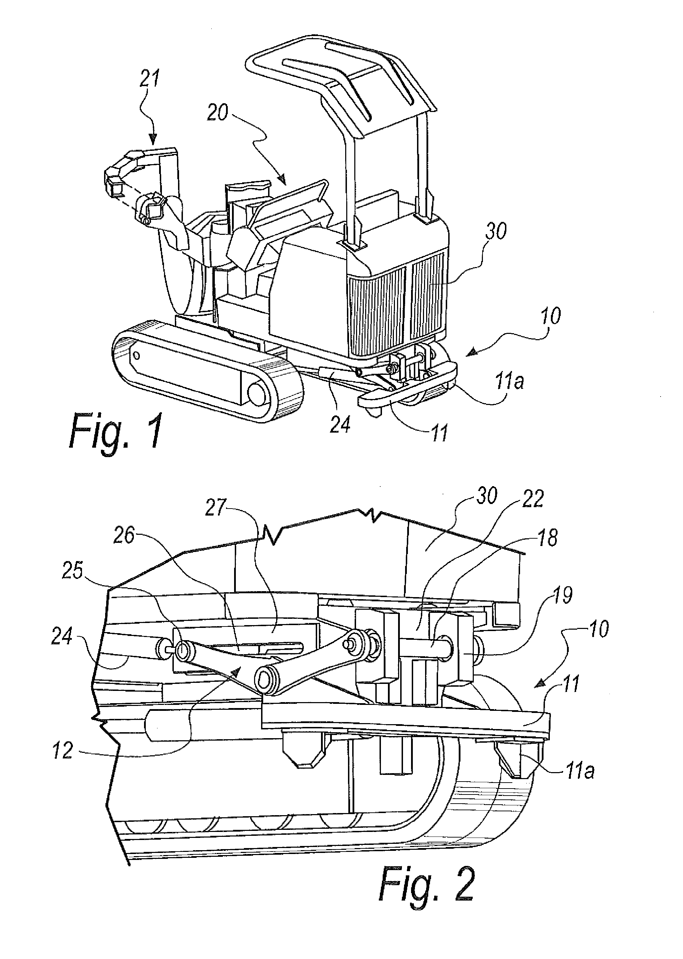

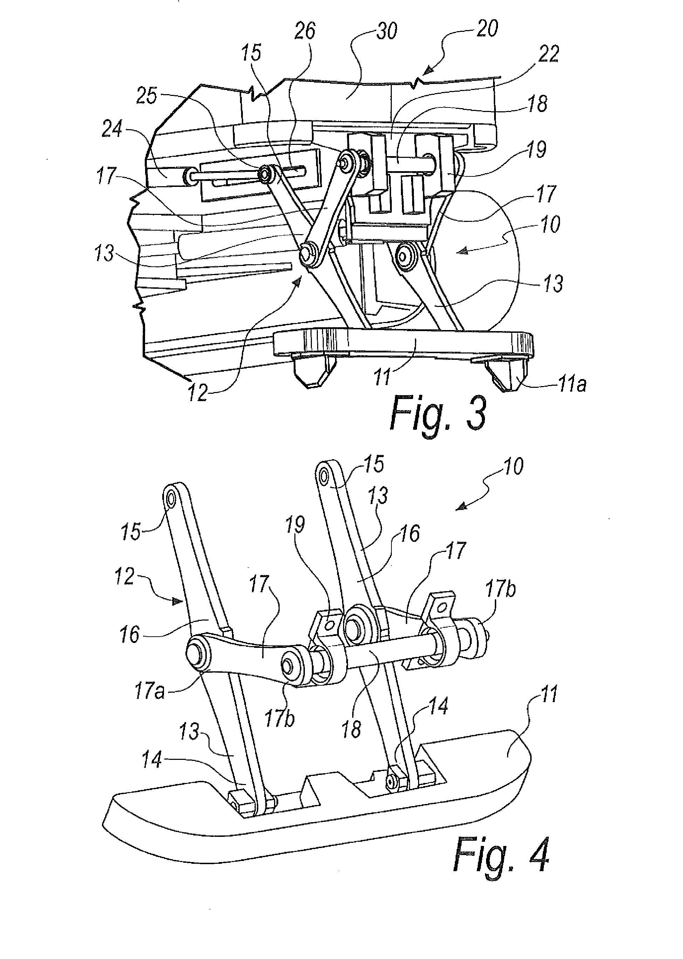

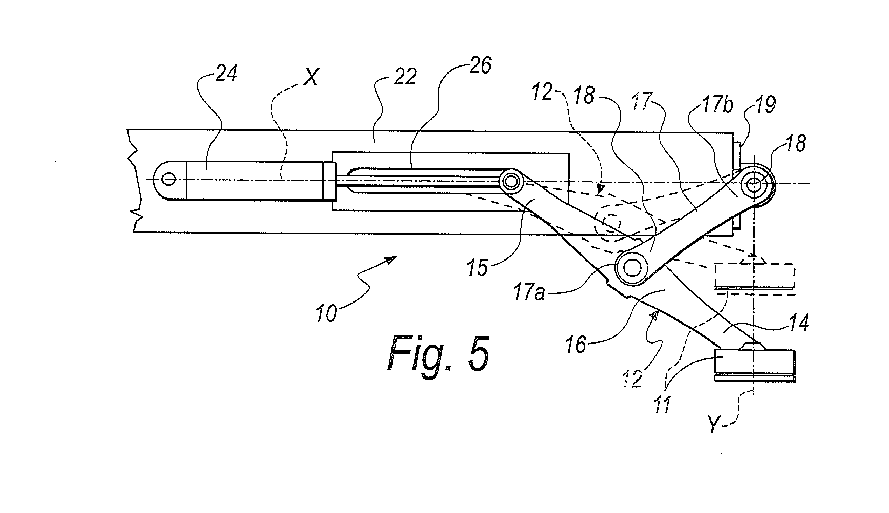

The mechanism 12 is actuated by actuation means designed to act in a direction X, shown in the diagram in Figure 5, which is transverse to the direction Y of motion of the resting element 11 from a first inactive configuration, as in Figure 2, to a second configuration for use, as in Figure 3.

In Figures 1 to 3 the device 10 according to the invention is shown fitted on a nursery garden work vehicle 20 with a root balling tool 21.

The pantograph mechanism 12 comprises two symmetrical arms 13, one for each side of the work vehicle 20.

Pivoted to a first end 14 of each arm 13 is the resting element 11. The resting element 11, which should be understood as being of a known type, is constituted by a metal plate-like body, of preset weight, and optionally comprising peg elements 11a to improve the ground grip.

Coupled to the second opposite end 15 of at least one arm 13, in the example described herein to both of the second ends 15, is the movable part of the actuation means.

Pivoted in a central region 16 of each arm 13 is a first end 17a of a corresponding rocker element 17, the second opposite end 17b of which is pivoted to a pivot 18.

This pivot 18 is supported so that it is inserted in corresponding holes that are defined on two brackets 19 fixed to the chassis 22 of the work vehicle 20.

The actuation means are constituted, in the present embodiment, by hydraulic pistons 24, the stem of which is adapted to push the second end 15 of the corresponding associated arm 13 by means of a pivot 25 which is in turn associated with a slider, not shown, which is arranged so as to slide in a guiding slot 26 formed in a plate 27 that is fixed to the side of the chassis 22 of the work vehicle 20.

The invention also relates to a work vehicle 20, particularly for plant nursery work, of the type that comprises at the front a work tool, for example a root balling tool 21, and at the rear a radiator, protected by a grille 30, for cooling the engine.

This work vehicle 20 is provided at the rear with a working trim stabilizer and load distribution device 10 as described above.

This stabilizer device 10 is fixed to the rear of the chassis 22, and specifically below the radiator 30.

The substantially horizontal movement of the second end 15 of the arms 13, owing to the action of the hydraulic pistons 24, determines the vertical lowering or raising of the resting element 11.

The distinctive structure of the stabilizer device 10 according to the invention makes it possible for it to be mounted on a work vehicle 20 of the type with a rear radiator 30 in a position that is such as to not affect the radiator 30 in any way, thus optimizing its efficiency.

Furthermore, the rear lifting of the work vehicle performed by the device 10 not only stabilizes the work trim, it also shifts the center of gravity of the vehicle forward, that is to say it distributes the load, so as to enable a safer use of the root balling tool that is carried.

Furthermore, the arms 13 that support the resting element are fixed to the chassis 22 of the vehicle 20 in a position that is closer to the ground than in known means of stabilization, which are fixed in the front of the radiator 30 and what is more the arms 13, in the configuration for use of the resting element 11, assume a position at an angle between 30° and 60° relative to the ground. This position of the arms 13, in the event of movement of the work vehicle 20 in a direction forward/rearward of the resting element 11 when lowered and in use, enables the chassis 22 and the device 10 itself to respond to improper stresses resulting from the movement of the vehicle 20 with the resting element 11 sunk into the ground, in a better manner than known means of stabilization, which, by extending substantially perpendicular to the ground, and by being fixed to the upper part of the radiator 30, are subjected to a torque that, as we have seen, leads to the detachment from the radiator 30 of the tubular body of the jack that forms the known means of stabilization.

In practice it has been found that the invention fully achieves the intended aim and objects.

In particular, with the invention a stabilizer device is provided which can be positioned so as not to affect the radiator grille and which consequently does not reduce the heat exchange capacity of the radiator.

Furthermore, with the invention a device is provided which, in the lowered configuration for use, better resists the stresses in the event of unexpected or improper movement of the work vehicle with which it is associated.

Furthermore, a stabilizer device is provided with performance levels that are not lower than the devices of the known type.

What is more, with the invention a stabilizer device is provided which is of less encumbrance than the devices of the known type.

Furthermore, with the invention a nursery garden work vehicle is provided, of the type of a root balling machine or the like, which is provided with a stabilizer device as described hereinabove.

In addition, with the invention a working trim stabilizer and load distribution device is provided for agricultural and plant-nursery machines, as well as a nursery garden work vehicle, of the type of a root balling machine or the like, which is provided with such a stabilizer device, and can be produced with known systems and technologies, as well as at low cost.

The invention thus conceived is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. PD2010A000196 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A working trim stabilizer and load distribution device (10) for agricultural and plant-nursery machines, **characterized in that** it comprises a ground resting contact element (11) supported by a mechanism of the pantograph type (12) which is actuated by actuation means designed to act in a first direction (X) that is transverse with respect to a second direction (Y) of motion of said resting contact element (11) from a first inactive configuration to a second configuration for use.

2. The device according to claim 1, **characterized in that** said pantograph mechanism (12) comprises two symmetrical arms (13), said resting contact element (11) being pivoted to a first end (14) of each arm (13), the movable part of the actuation means being coupled to the second opposite end (15) of at least one arm (13), a first end (17a) of a corresponding rocker element (17) being pivoted in a central region (16) of each arm (13), the second opposite end (17b) of said rocker element (17) being pivoted to a pivot (18), said pivot (18) being supported so that it is inserted in corresponding holes formed in two brackets (19) which are fixed to the chassis (22) of a work vehicle (20).

3. The device according to claim 1, **characterized in that** said actuation means are constituted by hydraulic pistons (24).

4. The device according to the preceding claims, **characterized in that** the stem of said hydraulic pistons (24) is adapted to push the second end (15) of the corresponding associated arm (13) by means of a pivot (25), which in turn is associated with a slider that is arranged so as to slide in a guiding slot (26) formed in a plate (27) which is fixed to the side of the chassis (22) of a work vehicle (20).

5. A work vehicle (20), particularly for plant nursery work, of the type that comprises at the front a working tool (21) and, at the rear, a radiator (30) for cooling the engine, and is provided at the rear with a working trim position stabilizer and load distribution device (10), **characterized in that** said stabilizer device (10) comprises a ground resting contact element (11), which is supported by a mechanism of the pantograph type (12) actuated by actuation means designed to act in a first direction (X) which is transverse to a second direction (Y) of motion of said resting element (11) from a first inactive configuration to a second configuration for use, said stabilizer device (10) being fixed substantially to the rear part of the chassis (22) so as to work below said radiator (30).
